# EUROPEAN PATENT APPLICATION

(11) **EP 0 663 760 A1**
(43) Date of publication of application: **19.07.1995**
(21) Application number: 95300220.1
(22) Date of filing: 13.01.1995
(51) Int. Cl.: H04N 1/40, H04N 1/401

(54) **Digital LED printer with improved data flow and control**

(30) Priority: 14.01.1994 US 181547
(71) Applicant: XEROX CORPORATION, Rochester New York 14644 (US)
(72) Inventor: Corona, Stephen C., Rochester NY 14617-4836 (US)
(74) Representative: Goode, Ian Roy

(57) **Abstract**

A digital LED printer is described which uses an improved control architecture to enable multi-exposure levels and multiple gray levels for a LED printbar. A plurality of LED chips are aligned in a row to form a printbar (27) of a length sufficient to expose the width of a recording medium, such as a photoreceptor drum or belt. Each LED chip has an associated driver chip (40) which controls the individual LED on/off time as well as the magnitude of current applied to each LED so as to maintain uniform exposure of each energized LED. The LED on/off time is controlled by selection of one of a plurality of two bit or four bit gray level strobe signals, which are decoded (38) according to system logic. The LED characteristics are measured (80) and stored (42) in a pre-operational mode to measure differences in gain characteristics; correction signals for each LED are then stored in memory and downloaded into the LED drive circuits at the end of each recorded line.

## Description

The present invention relates to a LED printbar for use in digital printing applications, and, more particularly, to improved control electronics for enabling a printbar with multiple exposure levels and multi-level gray exposures.

Image printbars which are used in image recording systems are well known in the art. The printbar generally consists of a linear array of a plurality of discrete, light-emitting sources. Examples of printbars include wire dot, electrostatic, ink jet, and thermal printheads. Light emitting diode (LED) printheads have become preferred because of their high resolution enabled by arranging in a linear array a large number of LED's and providing a relative movement between the LED printhead and an image recording member so as to produce a scanning movement of the array over the surface of the recording member. Thus, the recording surface is exposed to provide a desired image one line at a time. Each LED in a linear array is used to expose a corresponding pixel in the recording member to a value determined by image-defining video data information applied to the LED through driver circuitry. Conventionally, binary video data signals from a data source, which may be a Raster Input Scanner (RIS), computer, word processor or other source of digitized image data is clocked into a shift register assembly. The data bits are then shifted in parallel into latch circuits where they are temporarily stored. Some time after the start of a line signal, individual LED drive circuits are selectively energized to control the on/off timing of currents flowing through the LED's. The LED's are, thus, selectively turned on and off to form a line exposure pattern on the surface of the photoreceptor. A complete image is formed by successive line exposures. US-A-4,689,694; 4,706,130; 5,138,337 and 5,126,759 are representative of prior art printhead control circuitry. Prior art exposure control systems are disclosed in US-A-4,525,729 and US-A-5,025,322.

The prior art configurations are limited with respect to the addressability of individual LED's or pixels. The ability to tailor the addressability of the pixel to optimize pixel-to-pixel uniformity and to enable multiple exposure levels (grey level exposures) is adversely impacted by the limitations of the current data flow architecture. A further limitation of the prior art is the inability to accurately compensate for individual electrical to optical LED gain differences causing non-uniform pixel to pixel exposure. These differences exist at manufacture and are further altered during operation by aging, temperature or other factors.

The present invention relates to a digital printer comprising:
a LED printbar having a plurality of LED chips aligned along at least one row, said printbar being positioned in an image exposure relationship with a recording medium, moving in a process direction,
means for providing relative motion between the printbar and the medium,
printbar control circuit means for selectively energizing said plurality of LED's in accordance with image and pixel correction data signals,
multi-line data bus means for conveying multibit video data and pixel and configuration correction signals to said printbar control circuit means, said printbar control circuit means including:
means for applying gray level strobe input signals to a per pixel strobe line decode circuit,
latching register means for entering and temporarily storing line-by-line video input data and for logically ANDing the video data, with said gray level strobe input signals in said decode circuit,
end of line decoding means to generate strobe pulse outputs from said decode circuit, and
drive circuit means for driving each LED chip with an energizing current of a selected duration corresponding to the decode circuit strobe pulse output.

The present invention provides an improved electronic data flow architecture which utilizes a multi-line data bus for video data control and provides a high level of pixel to pixel uniformity correction as well as programmable multibit exposure (grey) capability. The input data rate is minimized by storing pixel correction information in the printhead at initial power up or during interimage time. The improved data flow architecture eliminates the need for shift registers and permits a more dynamic and versatile method for selectively addressing the individual LED drive circuits and for applying uniformity correction values.

A digital printer and method in accordance with the invention will now be described, by way of example, with reference to the accompanying drawings, in which:-

Figure 1 is a block diagram showing the major components of a LED printer according to the invention.

Figure 2 is a top view of the LED print head assembly shown schematically in Figure 1.

Figure 3 is a more detailed block diagram of the print control circuits of Figure 1.

Figure 4 is an electrical schematic of the strobe signal decode logic.

Figure 5 shows the binary weighted strobe signals used to produce grey levels in a variable base exposure.

Figure 6 shows a strobe signal time configuration that is position or time weighted.

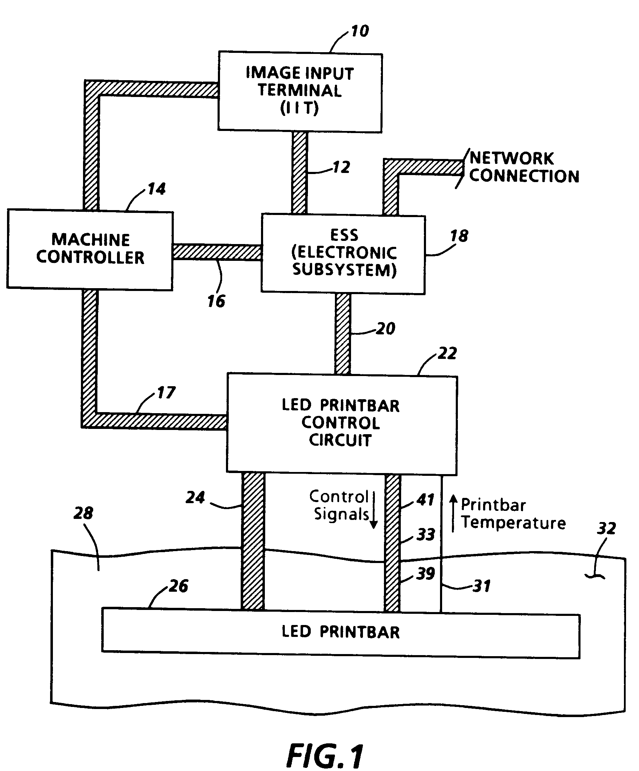

The improved electronic LED control architecture disclosed in the present invention can be used in digital printing environments such as that shown, for example, in US-A-5,278,625 and in US-A-4,689,694. In these references, LED printbars are selectively addressed to form line images on the surface of a charged photoreceptor belt or drum moving past the printbar. Figure 1 of the present application shows a block diagram for the data flow architecture to control the printhead operation. Binary image data originates in an image input terminal (IIT) 10 and is sent over bus 12 to ESS subsystem 18. Machine controller 14 has a stored program responsive to the input signals from IIT 10 for controlling user interface and various machine functions as well as initial process control. Image signals are processed and stored in a predetermined format in ESS (Electronic Subsystem) 18. The digital output from ESS 18 (1 bit or more for each pixel) is fed over bus 20 to LED printbar control circuit 22; control output from controller 14 is also sent over control bus 17 to circuit 22. Circuit 22 performs the functions of data reformatting, further image processing, printbar temperature compensation, control signal generation, and exposure level control. The binary image data output from circuit 22 is sent over bus 24 to LED chips on printbar 26. Each pixel in the modified bit stream output sent along bus 24 is represented by n bits. Thus, each pixel may be represented as having varying degrees of darkness and lightness. As an example, with three bits per pixel, eight different levels of gray can be used in the image. The individual LED's are activated to form a modulated exposure charge pattern on the surface 32 of a photoreceptor belt 28. The discharge characteristics are determined by both the light emitting characteristics of printbar 26 and the discharge characteristics of photoreceptor 28. For example, a highly efficient combination of printbar and photoreceptor includes a light emitting diode producing radiation having a wavelength of 720 nm and a corresponding photoreceptor designed for maximum discharge when irradiated with light having a wavelength of 720 nm. Also sent to printbar 26 are a plurality of multiple strobe lines whose function is described in detail below. Signals representing printbar temperature are sent along line 31 to circuit 22 and may be used by circuit 22 to further adjust the exposure of photoreceptor 28. Additional control signals are sent to LED printbar 26 over lines 41, 33 and 39.

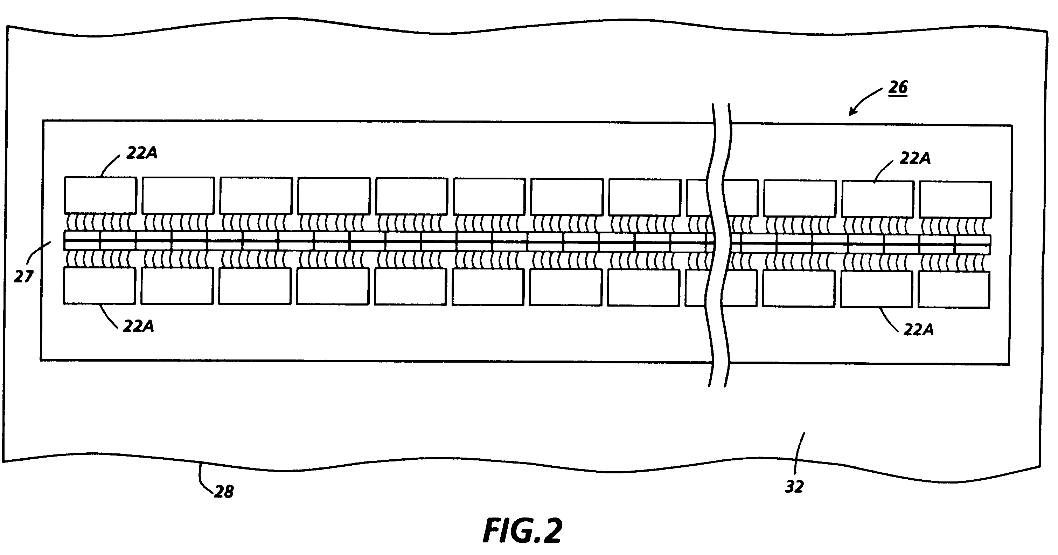

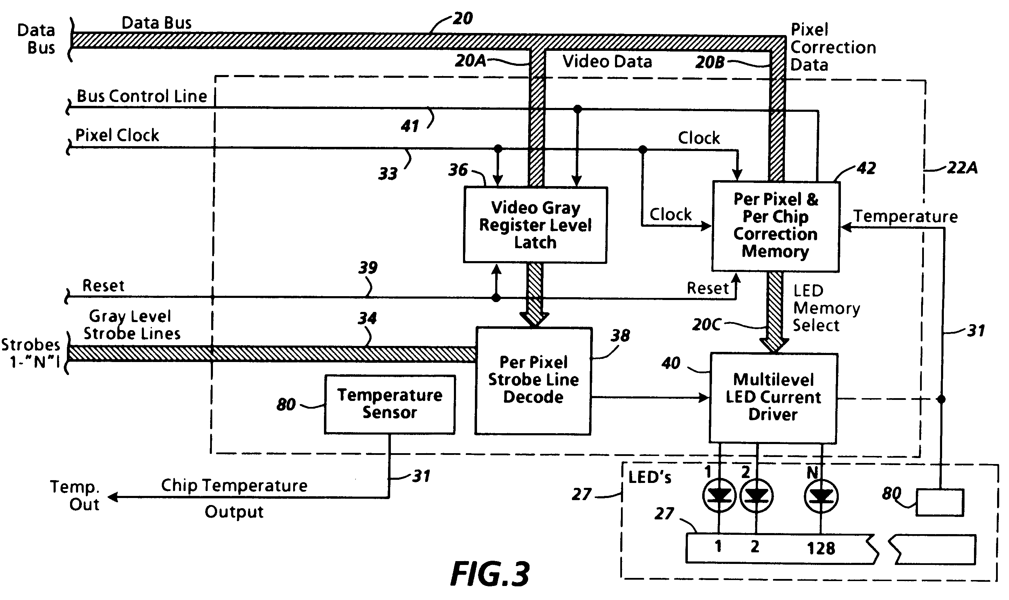

Referring now to Figure 2, the LED printbar 26 comprises a suitable support with a series of LED chips 27 and driver chips 22A mounted thereon. For this example, there are 32 LED chips, each chip having 128 LED's. LED chips 27 are arranged end-to-end in a row, and for the 32 chip embodiment, the printhead will extend across the width of belt 28 and include 4,096 LED's arranged in a single row. For each pair of LED chips, there is provided a pair of driver chips 22A, all of the driver chips are represented by circuit 22 of Figure 1; one chip is shown in block diagram form in Figure 3. The driver chips can be arranged on both sides of the LED chips as shown. Each driver chip includes circuitry, shown in Figure 3, for addressing the logic associated with each of the LED chips to control whether or not the individual LED pixels on each chip are energized, as well as to determine the level of current and a time duration of the signals applied to each LED pixel.

Optical means such as a gradient index lens array (not shown) may be positioned between the LED printbar 26 and surface 32 of belt 28 to focus the individual LED outputs onto the surface. The LED's (referred to as pixels hereafter) are triggered into operation (turned on and off) by means of printbar control circuit 22 responsive to information from ESS 18 and machine controller 14. The on time and, hence, the exposure of each pixel is controlled by the decoding of strobe input lines with binary video data as will be seen. The exposure pattern formed by selective discharge of surface 32 can be developed by toner particles of appropriate charge. The developed image is then transferred to an output sheet and fused. Details of charge, development, transfer and fusing using an LED type printer are disclosed in US-A-3,850,517 and 4,831,395.

Referring now to Figures 1, 2 and 3, the video data signals from the ESS are sent to the printbar control circuit 22 along bus 20. Bus 20 is a multiline (typically 8-32) wide data bus. For this example, a 16 bit data bus is used. Bus 24 is used to load both the video data (the image bit map) and correction and configuration information (data) as will be seen. Controller bus 20 is arbitrated by bus control signals on line 41; a pixel clock on line 33 is used to synchronize data loading.

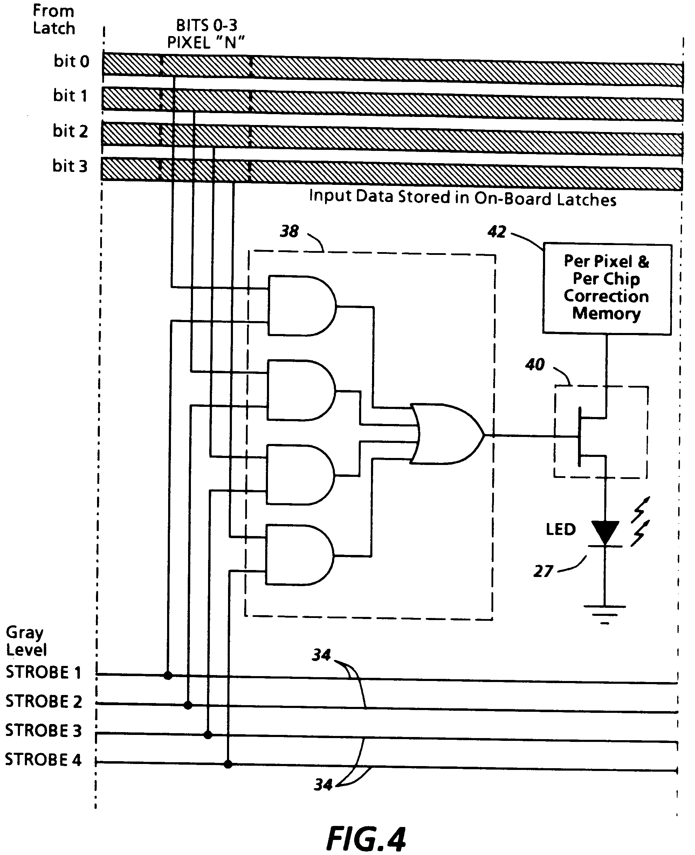

In general, the temporal on/off state of each of 128 outputs of each chip 22A is determined by the logical "OR" of all the 2-bit or the 4-bit video data logically "ANDED" with its respective four gray level strobe inputs as shown on Figure 4. The magnitude of the "on" current which is applied to each of the 4,096 LED's is set by a 6-bit "pixel uniformity correction" value and a 6-bit "array matching value", both signals having been loaded into correction memory 42. Each individual pixel uniformity correction value is dedicated to an individual driver output, but each of the two array matching values within a driver chip provides a correction for each LED chip to correct for LED chip to chip efficiency variations.

Data entry and processing proceeds as follows. Gray level strobes 1-N are entered along bus 34 into Per Pixel Strobe Line Decode Circuit 38. Video gray level latch register circuit 36 provides single line temporary storage for the video data used to store and hold the present video sent along data path 20A while the next video data line is being loaded. The latched data is used to select the proper combination of strobe lines for the respective pixel. Referring to Figure 4, selected four bit binary weighted signals stored in latch register circuit 36 are sent to per pixel strobe line decode circuit 38. The function of this circuit is to select the proper combination of input strobe lines. Figure 4 shows implementations of the Boolean function: (bit 0·STROBE 1) + (bit 1·STROBE 2) +(bit 2·STROBE 3) + (bit 3·STROBE 4) where · is the logical "AND" and + is the logical "OR" function.

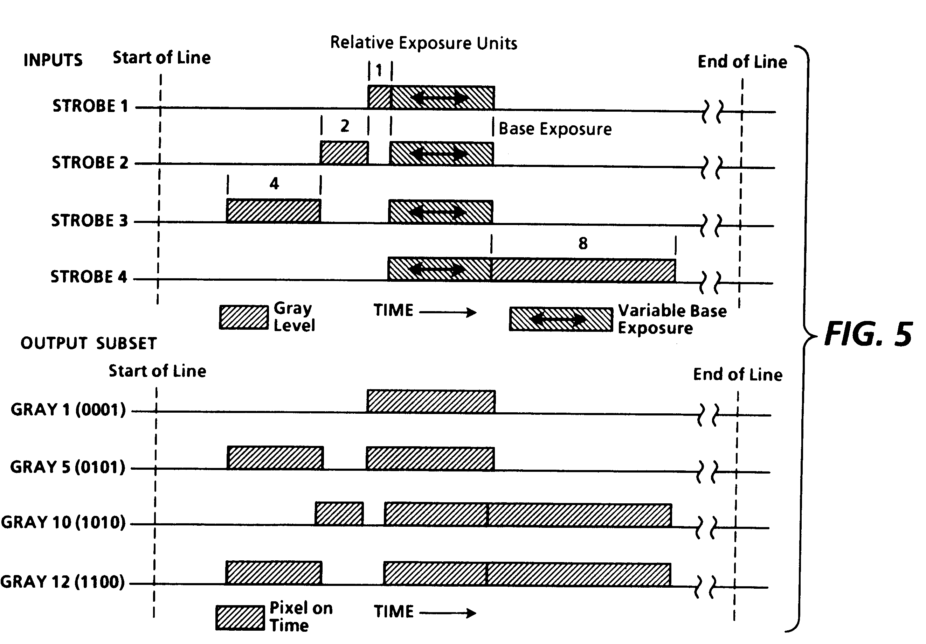

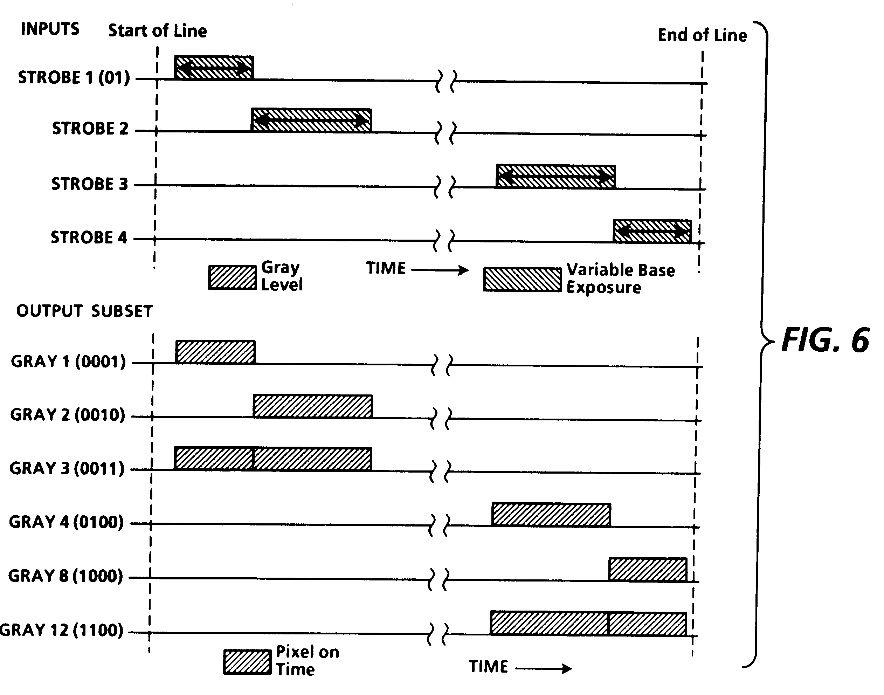

With four binary weighted input signals, 15 "on" times (or exposure levels) plus "off" are capable of being produced. Figure 5 shows the use of binary weighted strobe signals which are used to produce 15 levels of gray biased on a variable base exposure. The range span is set by adjusting the unit value of the binary weighted strobe "on" times such that "gray" value #15 is the maximum exposure required and that "gray" value #1 is the minimum required exposure level. The base exposure is used to bias the "gray level #1" value such that it is the minimum exposure required. This produces 15 separate and linearly spaced values of exposure to be produced from the minimum to the maximum exposure required by the system. The output of per pixel strobe line decode 38 is, thus, selected by the logic in response to the input gray level data and the strobe lines for each pixel. Referring to Figure 3, the output from the per pixel strobe line decode circuit 38 strobe lines are applied to the selected individual LED current drivers 40. Figure 6 shows a strobe signal time configuration that is position or time weighted so that individual pixels may be "moved" or incremented in the process direction. The particular configuration shown actually produces three levels of gray exposure positioned at the beginning or the end of the line time. Referring to Figure 2, each LED pixel has a particular and approximately linear response to the input drive current, resulting in a difference in the LED electrical to optical gain efficiency of individual LED's and, thus, in non-uniform pixel to pixel exposure. In this system, the particular "gain" of each pixel is measured and stored as correction values in circuit 22 of Figure 1. At a suitable time, usually at machine power up, the stored correction values (which may be later altered by temperature, aging or other factors) are downloaded into correction memory 42 shown in Figures 3 and 4. These stored values are used to select the proper drive current for individual LED's to compensate for LED differences and to maintain exposure uniformity. A temperature sensor 80 may be formed on each LED chip 27 or, alternatively, on each driver chip 22A to provide operating temperature information to the correction memory 42. The magnitude of the on current applied to each LED is, thus, controlled by a 4-8 bit "uniformity correction value" dedicated to each individual pixel, which is termed a "per pixel correction". The 4-8 bit per chip correction is similarly representing the average intensity of an entire chip of LED's. Each pixel uniformity correction value is dedicated to one LED driver output, but each of the two array matching values provides a baseline current for 64 LED driver outputs.

A print line is initiated by gray vector data passing along the data bus. One LED chip is selected (activated) for loading. All of the other LED chips are "deselected". Each drive chip has two associated bi-directional token passing pads. A LED chip is selected when it is in a "ready" mode and the logic level of the token passing pad configured as the input is in the active state. The bi-directional token passing pad connects the multiple drive chips in a daisy chain manner. When the first LED chip is inactivated, the "token" passes to the next chip in the selected direction.

A reset signal is applied along line 39 to clear memory tokens and reset the token to first memory.

It will be appreciated from the above description that other strobe signal durations and temporal weightings are possible with "on" time weightings that are non-linear and potentially useful to compensate for photoreceptor or process non-linearities.

## Claims

1. A digital printer comprising:
a LED printbar having a plurality of LED chips aligned along at least one row, said printbar being positioned in an image exposure relationship with a recording medium, moving in a process direction,
means for providing relative motion between the printbar and the medium,
printbar control circuit means for selectively energizing said plurality of LED chips in accordance with image and pixel correction data signals,
multi-line data bus means for conveying multibit video data and pixel and configuration correction signals to said printbar control circuit means, said printbar control circuit means including:
means for applying gray level strobe input signals to a per pixel strobe line decode circuit,
latching register means for entering and temporarily storing line-by-line video input data and for logically ANDing the line-by-line video input data, with said gray level strobe input signals in said decode circuit,
end of line decoding means to generate strobe pulse outputs from said decode circuit, and
drive circuit means for driving each LED chip with an energizing drive current of a selected duration corresponding to the decode circuit strobe pulse outputs.

2. The digital printer of claim 1, wherein said printbar control circuit means further includes a LED uniformity correction circuit for storing predetermined individual LED pixel exposure corrections, said uniformity correction circuit providing correction signals to said drive circuit means to control the magnitude of the energizing drive current applied to each LED chip so as to create uniform pixel to pixel exposure.

3. The printer of claim 2 further including a temperature sensor positioned in proximity to said LED printbar, said sensor producing an output which is a function of sensed temperature of the printbar, said output signals being sent to said correction circuit to generate output signals in a feedback loop to maintain the printbar at a predetermined temperature.

4. The printer of claim 1, wherein said printbar control circuit means includes circuitry for sequentially selecting LED chips for loading of data from said decode circuit.

5. A method for correcting electrical to optical efficiency of LED pixels in an LED printbar comprising the steps of:
measuring the gain of each pixel,
storing the gain as a correction value in a memory circuit,
applying the correction value to each individual pixel at the time an individual pixel is energized by a drive signal input and
adjusting the correction value in accordance with the measured gain of each LED pixel.

6. An image recording circuit apparatus comprising:
a LED printbar having a plurality of LED chips aligned along at least one row, said printbar being positioned in an image exposure relationship with a recording medium moving in a process direction,
means for providing relative motion between the printbar and the medium,
a source of binary video data signals,
a source of gray level strobe input signals,
drive means for selectively energizing each LED pixel on said LED chips for a period of time determined by binary input signals to said drive means, and
control means for generating and applying binary input signals to said drive means, said control means including logic means for decoding said strobe input signals in conjunction with said binary video data signals to generate said input binary signals to said drive means at a plurality of gray level exposures.

7. The apparatus of claim 6 further including LED uniformity correction means for correcting the current levels of each energized pixel to obtain an uniform level of output illumination from said printbar.

8. The apparatus of claim 6 further including circuit means for adjusting the gray level exposure for minimum and maximum exposure levels.

9. The apparatus of claim 6 further including means for a positive weighting of said strobe and video data signals to increment individual pixels in the process direction.

10. The apparatus of claim 7 further including a temperature sensor on each LED chip to provide operating temperature information to said correction means to adjust said current level for temperature variations.
